# EUROPEAN PATENT SPECIFICATION

(11) **EP 3 929 161 B1**
(45) Date of publication and mention of the grant of the patent: **02.10.2024**
(21) Application number: 20759616.4
(22) Date of filing: 14.02.2020
(51) Int. Cl.: C02F 1/28, B01J 20/10, C02F 101/16, B01J 20/32

(54) **METHOD FOR ADSORBING NITRATES BY MEANS OF ACTIVE MODIFIED SILICA FROM RICE STRAW ASH**
VERFAHREN ZUR ADSORPTION VON NITRATEN MITTELS AKTIVER MODIFIZIERTER KIESELSÄURE AUS REISSTROHASCHE
PROCÉDÉ D'ADSORPTION DE NITRATES AU MOYEN DE SILICE MODIFIÉE ACTIVE À PARTIR DE CENDRE DE PAILLE DE RIZ

(30) Priority: 18.02.2019 ES 201930133
(43) Date of publication of application: 29.12.2021
(73) Proprietor: Universitat Politècnica de València, 46022 Valencia (ES); Universitat de Valéncia, 46010 Valencia (ES); Università degli Studi di Genova, 16121 Génova (IT)
(72) Inventor: PRIMAZ, Carmem Tatiane, 46022 VALÈNCIA (ES); JORNET MARTÍNEZ, Neus, 46010 VALÈNCIA (ES); SANJUAN NAVARRO, Lorenzo, 46010 VALÈNCIA (ES); MOLINER ESTOPIÑÁN, Cristina Elia, 16121 GÉNOVA (ES); CAMPINS FALCÓ, Pilar, 46010 VALÈNCIA (ES); MOLINS LEGUA, Carmen, 46010 VALÈNCIA (ES); RIBES GREUS, María Desamparados, 46022 VALÈNCIA (ES); BADÍA VICENTE, José David, 46022 VALÈNCIA (ES); TERUEL JUANES, Roberto, 46022 VALÈNCIA (ES); GIL CASTELL, Óscar, 46022 VALÈNCIA (ES); BOSIO, Barbara, 16121 GÉNOVA (IT); ARATO, Elisabetta, 16121 GÉNOVA (IT)
(74) Representative: Cueto, Sénida
(86) International application number: PCT/ES2020/070099
(87) International publication number: WO 2020/169862

(56) References cited:
- WO-A1-2012/025943
- CN-A- 104 607 150
- US-A1- 2012 029 231
- US-A1- 2018 326 395
- RYU SEONG CHUL ET AL: "Recovery of nitrate from water streams using amine-grafted and magnetized SBA-15", KOREAN JOURNAL OF CHEMICAL ENGINEERING, SPRINGER US, NEW YORK, vol. 35, no. 2, 12 January 2018 (2018-01-12), pages 489 - 497, XP036409866, ISSN: 0256-1115, [retrieved on 20180112], DOI: 10.1007/S11814-017-0321-9
- RABIH SAAD ET AL: "Adsorption of phosphate and nitrate anions on ammonium-functionnalized mesoporous silicas", JOURNAL OF POROUS MATERIALS, KLUWER ACADEMIC PUBLISHERS, BO, vol. 15, no. 3, 6 March 2007 (2007-03-06), pages 315 - 323, XP019609396, ISSN: 1573-4854
- EBRAHIMI-GATKASH, M. ET AL.: "Amino-functionalized mesoporous MCM-41 silica as an efficient adsorbent for water treatment: batch and fixed-bed column adsorption of the nitrate anion", APPL WATER SCI, 2017, pages 1887 - 1901, XP55734780, [retrieved on 20190410]
- HAMOUDI, S. ET AL.: "Adsorptive Removal of Phosphate and Nitrate Anions from Aqueous Solutions Using Ammonium-Functionalized Mesoporous Silica .. nd", ENG. CHEM. RES, 2007, pages 8806 - 8812, XP55735076, [retrieved on 20190410]
- IMYIM, A. ET AL.: "Humic acids removal from water by aminopropyl functionalized rice husk ash", JOURNAL OF HAZARDOUS MATERIALS, 2010, pages 775 - 781, XP027422875, [retrieved on 20190410], DOI: 10.1016/j.jhazmat.2010.08.108
- LU , H.: "Synthesis and characterization of amino-functionalized silica nanoparticles", COLLOID JOURNAL, vol. 75, no. 3, May 2013 (2013-05-01), pages 311 - 318, XP55735079, [retrieved on 20190410]
- RAHMAN, I.A. ET AL.: "Synthesis of organo-functionalized nanosilica via a çco-condensationmodification using aminopropyltriethoxysilane (APTES", CERAMICS INTERNATIONAL, vol. 35, 2009, pages 1883 - 1888, XP026058753, [retrieved on 20190410]

## Description

### Field of the invention

The present invention relates to a method for the adsorption of nitrates in water or aqueous solutions by means of active modified silica from rice straw ash.

### State of the Art

Nitrates pollution is currently an increasing problem that affects both the quality of both surface and underground waters. The use of chemical fertilizers has increased considerably over the last decades, causing noxious environmental processes, including contamination of the aqueous resources. This water contamination can have effects on human health by their ingestion, either dissolved in water or in foods. Consumption of water with high concentrations in nitrates poses a health hazard, since nitrates can form nitrosamines and nitrosamides, potentially carcinogenic compounds.

Silica particles are widely used in many fields as fillers, catalyst carriers, biological and medicinal materials. In order to improve the application performance, their surfaces generally need to be modified by functional chemical groups. The surface of the silica particles can be modified by different processes and one of the most attractive is the organofunctionalization, where the modifying and coupling agent is an organic group. A possible coupling agent can be 3-aminopropyltriethoxysilane (APTES) since it allows for attachment of molecules through its terminal amines and also exhibits self-assembly. On the other hand, the Stöber method is a widely used method for the synthesis of nanoparticles such as silica, where tetraethyl orthosilicate (TEOS) and other silicates are combined in a mixture of water, ethanol and ammonia and stirred to form particles whose size depends on the concentration of the solvents and the silicate additives.

WO2012025943A1 discloses a method for water purification using as filters, rice straw ash functionalized with an aqueous solution of 3-Aminopropyltriethoxysilane (APTES) to obtain RHA (rice straw ash), and then is heated to obtain pre-treated RHA to which a disinfectant is added.

The documents "Humic acids removal from water by aminopropyl functionalized rice husk ash"; Journal of Hazardous Materials; 2010; Volume 184, issues 1-3, Pages 115-781, and "Evaluation of a rice husk filter system for rainwater treatment Andrés Suárez, Paola Mesa, Victor Bravo and Andrés Prieto; MUTIS, Vol 5 (1) pp. 21-27, January-June, 2015; DOI: http://www.pp//10.21789/22561498.1015; refer to rice husk. In the first one, it is thermally pretreated with HCl at 700°C and chemically modified with APTES for use as an adsorbent suitable for humic acids of water. While in the second describes the use of rice husks to filter water without any rice husk functionalization treatment.

The use of silane-treated silica filter media, such as rice husk ash, is described in patent application US2007267349A1. In one of the examples, it relates to rice straw ash functionalized with, among others, 3-aminopropyltrimethoxysilane for use in filters used for protein filtration. Further examples are disclosed in RABIH SAAD ET AL: "Adsorption of phosphate and nitrate anions on ammonium-functionalized mesoporous silicas", JOURNAL OF POROUS MATERIALS, KLUWER ACADEMIC PUBLISHERS, BO, vol. 15, no. 3, 6 March 2007, pages 315-323.

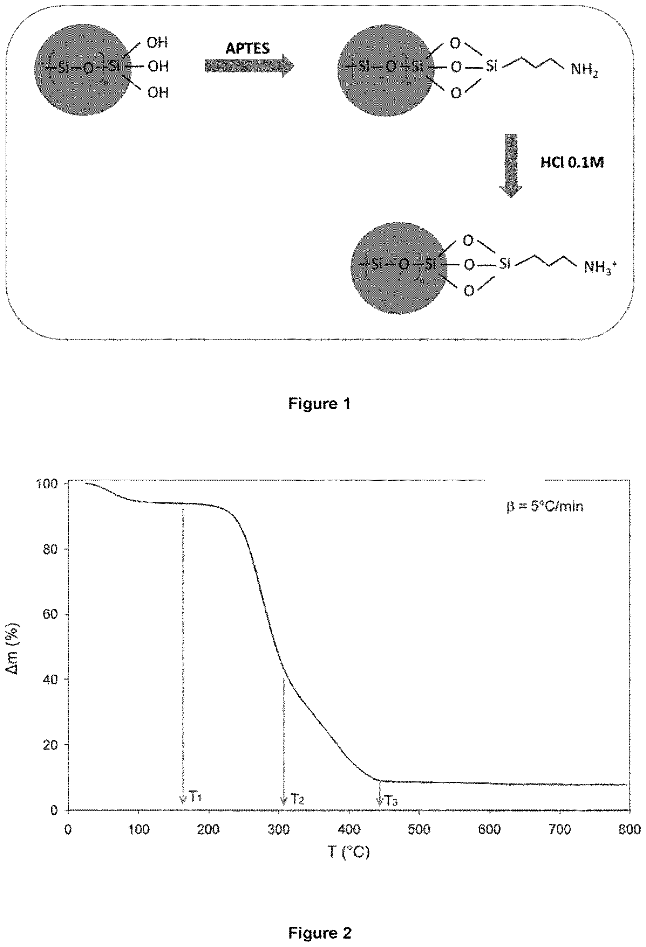

In the present invention, the modification of rice silica is described. The silica particles can be optionally treated with TEOS, while APTES is then added which modifies the surface of the silica and the active. The silica obtained allows the adsorption of the nitrates present (FIG. 1) between 30 and 98%.

### Description of the invention

In this document, the acronym "TEOS" refers to tetraethyl orthosilicate.

The acronym "APTES" refers to the compound 3-aminopropyltriethoxysilane.

The acronym "APTMS" refers to the compound 3-aminopropyltrimethoxysilane.

In this specification, the term "rice silica" is used with an equivalent meaning to "rice straw silica" and "rice straw ash silica", and are used interchangeably.

"Rice straw ash" refers to the residue that results from burning rice straw.

"Ammonia" as used in the present invention refers to ammonia as an aqueous solution, from a solution of the ammonium chloride salt in water

In this invention "Room temperature" refers to a temperature between 5 and 35°C, more preferably between 15°C and 30°C.

"Average speed" refers herein to a speed between 400 and 600 rpm, and preferably between 450 and 550 rpm, more preferably 500 rpm.

In this document the expression "water nitrates" has a general meaning, encompassing aqueous solutions, and is therefore used equivalently to the expression "water nitrates or aqueous solutions nitrates". Both expressions are also equivalent to "nitrates in water" or "nitrates in water or in aqueous solutions".

In this document the term "room temperature" refers to a temperature between 10 and 35°C, preferably between 15 and 30°C.

The present invention relates to a method for the adsorption of nitrates in water by means of active modified silica from rice straw ash according to claim 1.

It is important to highlight that the synthetic stages take place at room temperature (considered as a wide range between 10°C and 35°C, preferably 15°C to 30°C) since there is no need for extra energy consumption or instrumentation etc. to heat or cool the solutions.

In step b) the rice straw silica is added to a mixture of alcohol and water under continuous stirring.

In step b) the ratio rice straw ash silica to alcohol and water mixture is between 100 and 200 mL of liquid per gram of silica, more preferably 120 mL of liquid per gram of silica (120/1).

In a particular embodiment, the alcohol/water volume ratio in step b) is between 3/1 to 6/1, more preferably 5/1.

The alcohol in step b) can be selected from ethanol and methanol. In a preferred embodiment, the alcohol is ethanol.

In step c) the catalyst is added at room temperature as defined above, and preferably between 15 and 30°C, both temperatures included.

The catalyst that is added in step c) is selected from ammonia, ammonium acetate, ammonium carbonate, magnesium oxide, calcium hydroxide, triethanolamine and dicyclohexylamine. More preferably, this compound is ammonia.

In step c) the proportion of catalyst compound may be between 0.05-1.5% (v/v) [percentage of the volume of the compound with respect to the total volume], preferably 0.1-0.8% (v/v) and more preferably 0.15-0.25% (v/v).

Optionally, an alkoxysilane compound can be added in step c), which can be tetraethyl orthosilicate, trimethoxysilane or methyltriethoxysilane. Preferably, the alkoxysilane compound is tetraethyl orthosilicate. The alkoxysilane compound can be present in a proportion between 0,0-6.0%, preferably 0.0-4.5% and more preferably between 0-3% (v/v), [percentage of the compound volume with respect to the total volume].

In a particular embodiment, in step c) the mixture is kept under stirring for a time between 2 and 5 hours, preferably 2 to 4 hours and more preferably 3 hours.

In a further particular embodiment, the stirring of step c) is carried out magnetically at a speed of 500 rpm for a time between 2 and 5 hours, preferably 2 to 4 hours and more preferably 3 hours.

In another particular embodiment, the aminoalkoxysilane of step d) is selected from 3-aminopropyltriethoxysilane and 3-aminopropyltrimethoxysilane.

The ratio of aminoalkoxysilane compound can be 2 mL per gram of silica (2/1) and more preferably 1 mL per gram of silica (1/1).

In step d) the mixture from step c) can be kept stirred at an average speed of 400-600 rpm, preferably 500 rpm.

The stirring time in this stage is between 2 and 12 hours, preferably between 3 and 9 hours, and more preferably between 5 and 7 hours.

In a particular embodiment, the stirring of step d) is carried out magnetically at a speed of 500 rpm for a time between 2 and 12 hours, preferably between 3 and 9 hours, and more preferably between 5 and 7 hours.

In another particular embodiment, the method further comprises a step of decantation and air drying between steps d) and e), of the modified silica obtained.

The volume of acid treatment in step e) can be between 6-20 times the mass of modified silica used, more preferably between 10-15 times the mass of modified silica used.

In a particular embodiment, the acid in step e) is selected from hydrochloric acid and acetic acid. Preferably the acid is hydrochloric acid. Hydrochloric acid can be in a concentration between 0.08 and 0.2M, in a proportion of 10 mL of acid per gram of modified silica.

In the continuous treatment carried out in step e), the material obtained is treated for a time of 1 to 5 hours, preferably 2 to 3 hours, without heating.

In a particular embodiment, in step f), the water or aqueous solution from which the nitrates are to be removed is passed through a column containing the active modified silica obtained in step e), such that the flow of the water or aqueous solution passing through the solid is 2 to 40 mL/min, more preferably 5 to 15 mL/min. 1 mL aliquots of can be collected every 30 seconds and measured by ultraviolet visible spectrophotometry at 220 nm.

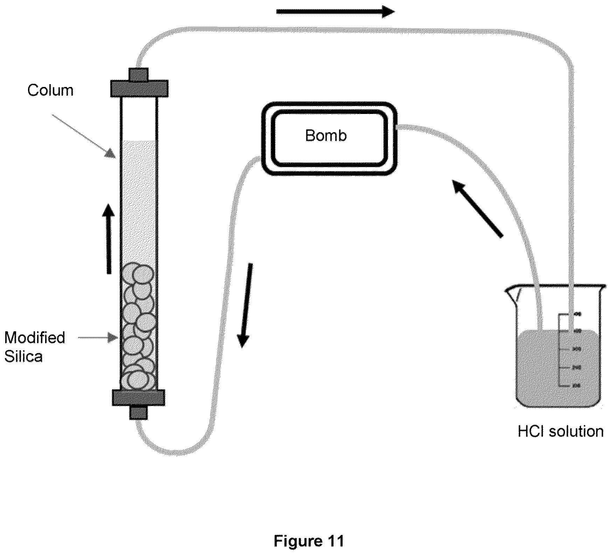

According to particular embodiments, the method comprises:
a) adding silica from rice straw ash to a mixture of alcohol and water in a proportion between 100 and 200 mL of liquid per gram of silica, more preferably 120 ml of liquid for each gram of silica (120/1), obtaining a suspension,
b) adding catalyst to the suspension of step a) in a proportion between 0.05-1.5% (v/v) [percentage of the compound volume with respect to the total volume], preferably 0.1-1.8% (v/v) and more preferably 0.15-0.25% (v/v) and an alkoxysilane compound in a proportion between 0.0-6.0%, preferably 0.0-4.5% and more preferably between 0-3% (v/v) to the suspension of step a) and keep under stirring for a time between 2 and 5 hours, preferably 2 to 4 hours and more preferably 3 hours at a speed of 500 rpm and room temperature,
c) adding an aminoalkoxysilane compound in the proportion 2 mL per gram of silica (2/1) and more preferably 1 mL for each gram of silica (1/1) to the mixture of step b) and keep stirring for an interval between 2 and 12 hours, preferably between 3 and 9 hours, and more preferably between 5 and 7 hours, at 500 rpm and room temperature, after which the modified silica is decanted and dried in air,
d) treatment by continuous recirculation (Figure 11) of the modified silica obtained in step c) with hydrochloric acid between 0.05-2M, preferably 0.05-0.6M, and more preferably between 0.08 and 0, 2 M, in proportion 6-20 times the mass of silica, preferably 8-15 times and more preferably 10 mL of acid per gram of silica c), obtaining the active modified silica,
e) the water or aqueous solution from which the nitrates are to be removed is passed through a column containing the active modified silica obtained in step d), such that the flow of the water or aqueous solution that passes through of the solid is 5 to 40 mL/min, more preferably 10 to 20 mL/min. 1 mL aliquots can be collected every 30 seconds and measured by ultraviolet visible spectrophotometry at 220 nm.

As the first step of the method of the invention, the rice straw is burned by a known process. The burning process occurs by raising the temperature up to 500°C. The burn time can last up to 8 hours.

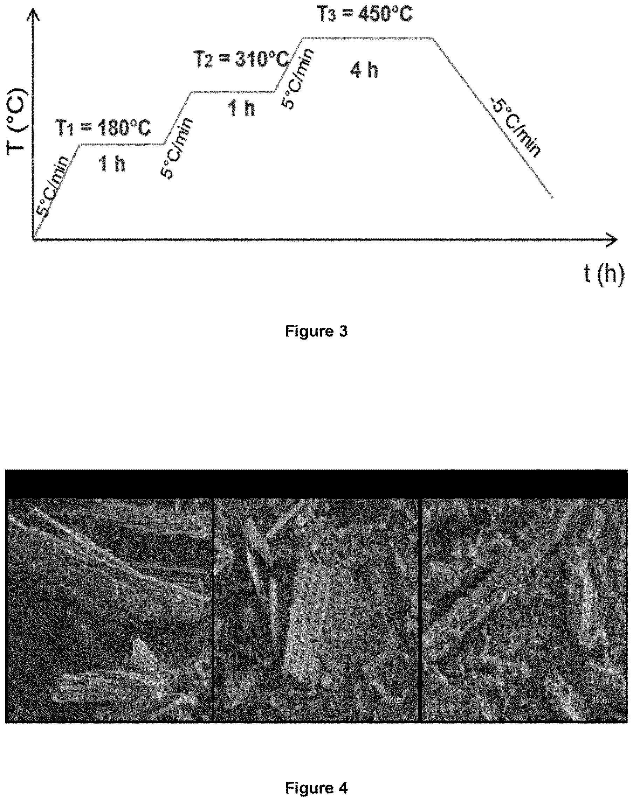

To carry out the process of the invention, the burned rice straw is obtained under conditions that can be, for example: burning the straw by means of a temperature ramp up to approximately 500°C in a time of 5 hours and with a total heat treatment of up to 8 hours. A particular example with the rise in temperature and times is shown in figure 3: The temperature is raised at a rate of 5°C/minute, maintaining a temperature of 180°C for one hour, again raised to 310°C at a rate of 5°C/minute and maintained at 310°C for one hour, and continued to be raised at 5°C/minute up to 450°C, maintaining 4 hours at this temperature, to then decrease to 5°C/minute lowering speed.

### Description of the Figures.

In order to assist in a better understanding of the features of the invention, a set of drawings is attached as an integral part of said description in which the following has been illustrated for illustrative purposes:
Figure 1: Shows a diagram of the silica modification steps, according to a particular embodiment.
Figure 2: Shows a graph of the thermal decomposition profile of rice straw with the thermogravimetry technique(TGA).
Figure 3: Shows a graph of temperature and burning times of rice straw.
Figure 4: Shows SEM images of the study by (180x, 500x, 500x) for rice straw ash.
Figure 5: Shows a graph of the elemental mapping of the rice straw ash surface.
Figure 6: Shows active modified silica from rice straw.
Figure 7: Shows the infrared spectra of rice straw ash, commercial silica, and silica extracted from rice straw ash.
Figure 8: Shows the infrared spectrum for silica and modified silica.
Figure 9: Shows the results from the continuous adsorption test using a well water sample with a nitrate concentration of 45.67 ppm.
Figure 10: Shows the results from the continuous adsorption test using a waste water sample with a nitrate concentration of 172.24 ppm.
Figure 11: Continuous recirculation set-up of the analysis system.

### Examples

The invention will be illustrated below by means of tests that demonstrate the effectiveness of the product of the invention.

### Example 1. Method for obtaining ash from rice straw wastes

The valorisation of rice straw waste is carried out according to a controlled temperature system according to the following characteristics:
- Obtaining a thermal decomposition profile of rice straw with the TGA technique(Thermogravimetry). Decomposition rate of 5°C/min in an oxidizing atmosphere (Figure 2)
- Definition of temperature ranges and burning times to ensure that high quality ashes are obtained (figure 3).

Thus, the first decomposition stage ensures the complete removal of moisture (up to T1), the second stage ensures the removal of volatiles (up to T2) and the third stage ensures the oxidation of the fixed carbon (above T3). Thus, T3 can be defined as the minimum temperature that implies a complete combustion of the rice straw and therefore a maximized amount of ash in the amorphous state.

### Example 2. Method for obtaining ash from rice wastes

2.0 g of rice silica, derived from rice straw ash, was added to a mixture of 200 ml of ethanol and 40 ml of distilled water, under continuous stirring. Then a solution of 5.0 ml ammonia (30% by volume) and between 0 and 6.0 ml of TEOS (tetraethyl orthosilicate) were added to the suspension. The reaction was allowed to continue for 3 hours under stirring. Then 2.0 ml of APTES (3-aminopropyltriethoxysilane) was added and the mixture was stirred for 6 hours at room temperature, until the solution turned white and the sol-gel was formed. After the reaction was completed, the products were collected by decantation and air drying, then the material was acidified by continuous recirculation, to protonate the positively charged amino groups responsible for anion adsorption. Recirculation was carried out taking into account the following ratio: 1 g of the material obtained in 10 ml of 0.1 M HCl for 2-3 hours without heating. The nitrate-containing silica residues will be delivered to a ceramic company for later inclusion in the manufacturing processes.

The study and characterization of the surface morphology of the ash was carried out by means of scanning electron microscopy (SEM) and through energy dispersive X-ray spectrometry (EDS) analysis, elemental mapping of the surface of the materials was made possible, as well as qualitative and quantitative reading of the chemical elements. A SEM-EDS equipment (SEM HITACHI S4800) was used for the analyses. The samples were mounted on metal supports that were subsequently coated with a layer of platinum and gold for 2 minutes. The analyses were carried out at room temperature with a voltage of 20 kV.

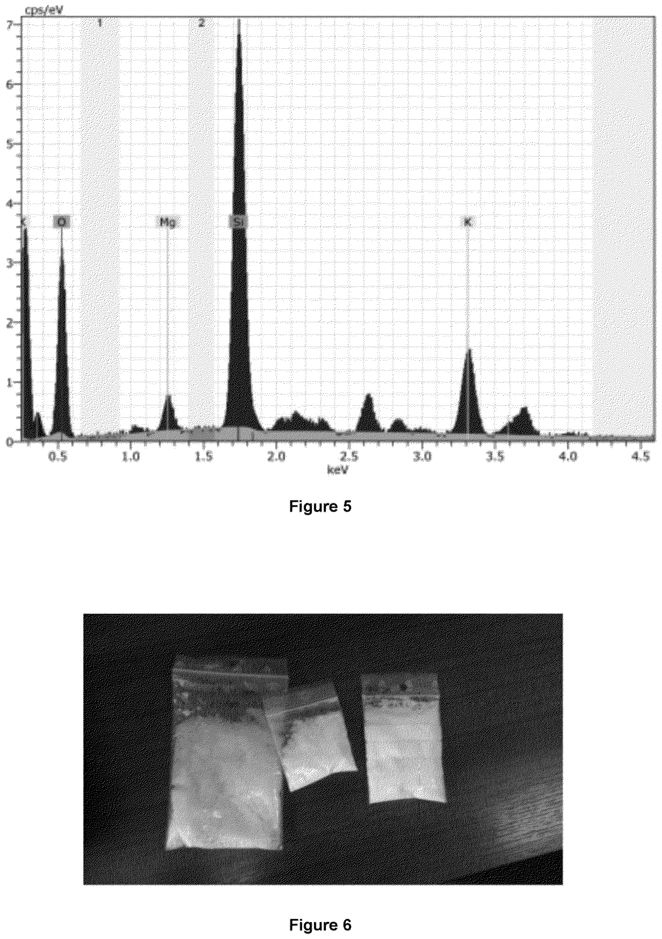

The study using (SEM) and (EDS) for rice straw ash is shown in sequence in Figures 4 and 5 and Table 1.

**Table 1: Quantification of the main surface elements of ash of rice straw.**

| Spectra 1 | | | | | |
|---|---|---|---|---|---|
| Element | Series | Unn. C [wt. %] | Norm. C [wt. %] | Atom. C [at. %] | Error [wt.%] |
| Oxygen | K-series | 20,28 | 56,42 | 70,96 | 3,0 |
| Magnesium | K-series | 1,32 | 3,67 | 3,04 | 0,1 |
| Silicon | K-series | 9,71 | 27,01 | 19,36 | 0,4 |
| Potassium | K-series | 4,63 | 12,90 | 6,64 | 0,2 |
| | Total | 35,94 | 100,00 | 100,00 | |

The rice straw ashes have an irregular and lamellar surface morphology, where the fibrous structure of the straw, which remained even after burning, can also be observed. It is not possible to visualise pores on the surface of the material. The EDS result for this sample showed Si, O, K and Mg as the main components, with silicon and oxygen being the major components.

### Example 3. Characterization of the obtained material

To evaluate the functional groups present in the samples of ash, rice silica and commercial silica, Fourier Transform Infrared Spectroscopy (FT-IR) analysis was performed. A Carry 630 FT-IR equipment (Agilent) was used. The spectrum was obtained with a resolution of 4 cm⁻¹ in the range 4000-600 cm⁻¹.

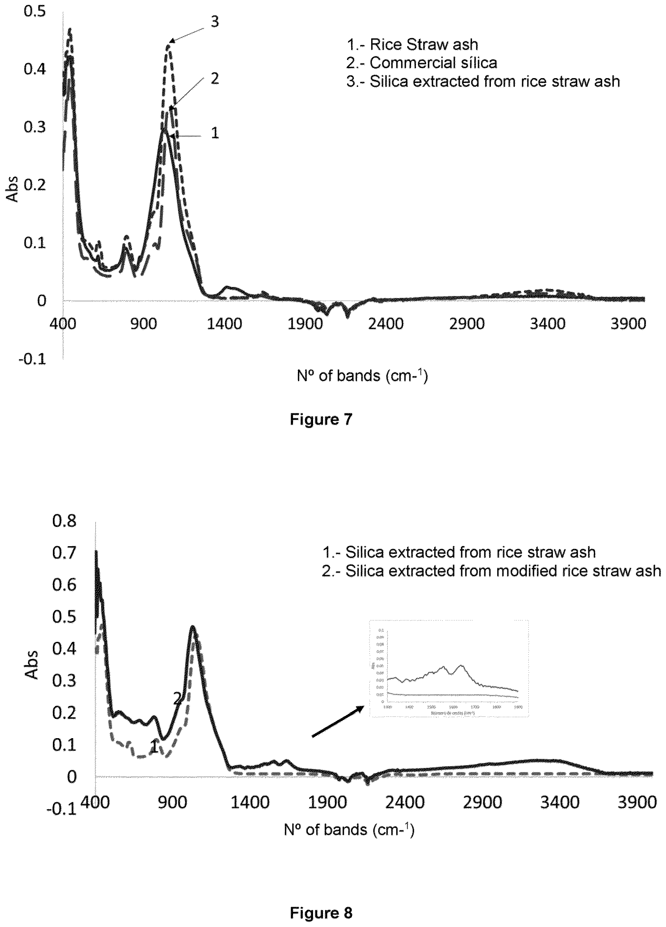

Figure 7 presents the results of the FT-IR infrared analysis for the purpose of comparing the spectra of commercial silica, rice silica and rice ash.

The three samples show very similar profiles, with the main adsorption bands at 1066 cm⁻¹ and 809 cm⁻¹, these bands represent vibrations for the Si-OH and Si-O-Si groups respectively, which indicates the main functional groups present on the surface and composition of the material.

Figure 8 presents the results of the infrared analyses for the modified and unmodified rice silica, and the characteristic bands 1525 cm⁻¹ and 1637 cm⁻¹ can be observed, which correspond to the vibrations of the N-H bond of the amino groups of modified silica.

### Example 4. Nitrate adsorption

Material contact tests were carried out with nitrate concentrations, and a second test with distilled water (considered as blank). Real water samples have also been processed.

5 ml vials were used with approximately 100 mg of the adsorbent material (active modified silica), 2 ml of distilled water for blank and 2 ml of the solution containing nitrates. A stir bar was introduced into all the vials, and they were left on the magnetic stirrer, under constant stirring for 1 hour.

After 40 minutes of contact, the solution was transferred from the vial into test tubes, centrifuged for 30 minutes at a rotation of 6000 rpm (to avoid suspended particles in the solution) and then absorbance measurements were made in a Carry 60 UV-Vis Spectrophotometer (Agilent technologies). For all tests, a measurement of distilled water is initially performed for the baseline and the 25 mg / L nitrate solution is also measured for use as a standard.

To calculate the percentage of adsorption, the absorbance values of the pollutant must be selected, which for nitrates is 220 nm and it has a higher absorbance value, for example, 700 nm, for the correction of the baseline. The contribution of the values of the blanks made with distilled water was taken into account it counts. These values are discounted from the absorbance values.

The amount of nitrates adsorbed was calculated according to the value obtained for the nitrate standard and the value obtained for the solution that remained 40 minutes in contact with the adsorbent.

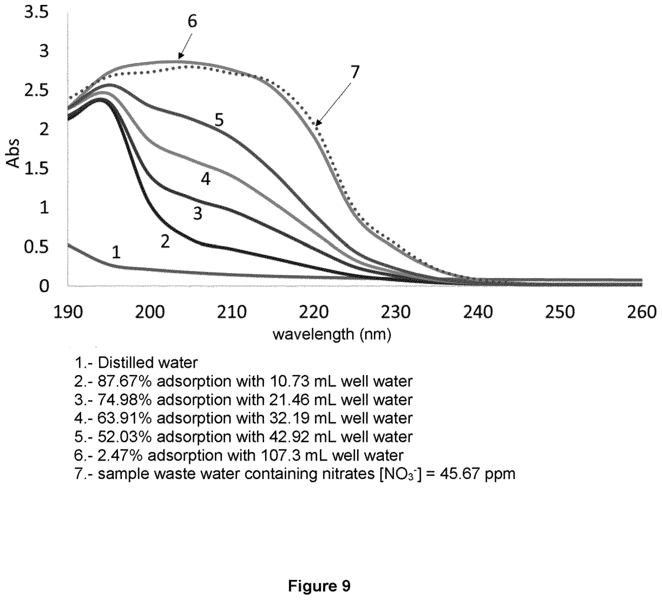

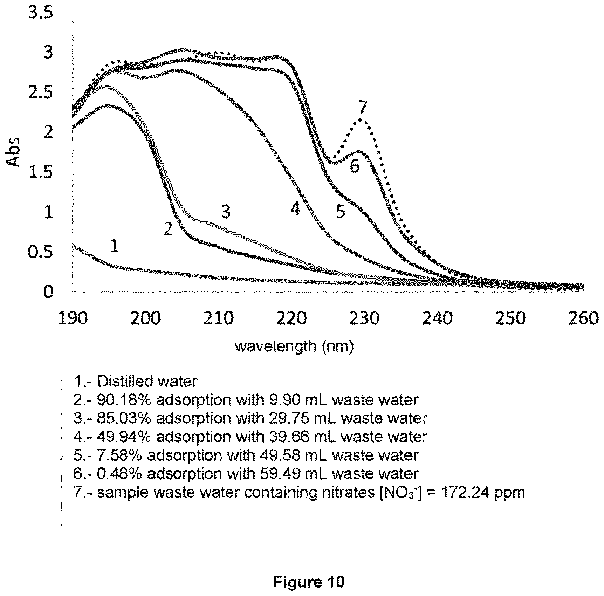

On the other hand, a continuous test was also carried out using the set-up of Figure 11 without recirculating the sample. In this case, about 150 mL of sample was passed through the active modified silica, which was retained in a column as specified below. Progressively, sample aliquots were collected every 30 seconds and were analysed by ultraviolet visible spectroscopy, observing that there was a greater adsorption for the first aliquots, which decreased as the silica became saturated. These data can be observed in Figures 9 and 10, in which two types of samples with different concentrations of nitrates are used.

The adsorption values are reproducible and the functionalization process is efficient for the application of rice silica as a nitrate adsorbent.

## Claims

1. A method for adsorbing nitrates in water using active modified silica from rice straw ash, which comprises the following steps:
a) burning rice straw to produce rice straw ash and extracting silica from the resulting rice straw ash,
b) adding said silica extracted from rice straw ash to a mixture of alcohol and water obtaining a suspension,
c) adding a catalyst selected from ammonia, ammonium acetate, ammonium carbonate, magnesium oxide, calcium hydroxide, triethanolamine and dicyclohexylamine, to the suspension of step a) and keeping under stirring at room temperature,
d) oer adding an aminoalkoxysilane compound to the mixture of step b) and keeping under stirring, at room temperature, obtaining modified silica,
e) treatment by continuous recirculation of the modified silica obtained in step c) with an acid, obtaining active modified silica,
f) contacting the active modified silica obtained in step d) with the water from which the nitrates are to be removed.

2. The method according to claim 1, wherein the alcohol/water volume ratio in step b) is from 3/1 to 6/1.

3. The method according to claim 1, wherein the alcohol of step b) is selected from ethanol and methanol.

4. The method according to the preceding claim, wherein the alcohol is ethanol.

5. The method according to the preceding claim, wherein the catalyst is ammonia.

6. The method according to claim 1, wherein in step c) an alkoxysilane compound selected from tetraethyl orthosilicate, trimethoxysilane and methyltriethoxysilane is added.

7. The method according to the preceding claim, wherein the alkoxysilane compound is tetraethyl orthosilicate.

8. The method according to claim 1, wherein the aminoalkoxysilane of step d) is selected from 3-aminopropyltriethoxysilane and 3-aminopropyltrimethoxysilane.

9. The method according to claim 1, further comprising a decanting and air-drying step between step d) and e) of the obtained modified silica.

10. The method according to claim 1, wherein the acid in step e) is selected from hydrochloric acid and acetic acid.

11. The method according to claim 1, wherein the acid is hydrochloric acid.

12. The method according to claim 11, wherein the proportion of acid is 10 ml of between 0.08 and 0.2 M HCl per 1 g of the modified silica.

## Patentansprüche

1. Verfahren zur Adsorption von Nitraten in Wasser unter Verwendung von aktiv modifiziertem Siliciumdioxid aus Reisstrohasche, das die folgenden Schritte umfasst:
a) Verbrennen von Reisstroh zur Erzeugung von Reisstrohasche und Extrahieren von Siliciumdioxid aus der entstehenden Reisstrohasche,
b) Zugeben des aus Reisstrohasche extrahierten Siliciumdioxids zu einer Mischung aus Alkohol und Wasser, wodurch eine Suspension erhalten wird,
c) Zugeben eines Katalysators, ausgewählt aus Ammoniak, Ammoniumacetat, Ammoniumcarbonat, Magnesiumoxid, Calciumhydroxid, Triethanolamin und Dicyclohexylamin, zu der Suspension aus Schritt a) und Halten unter Rühren bei Raumtemperatur,
d) Zugeben einer Aminoalkoxysilanverbindung zu der Mischung aus Schritt b) und Halten unter Rühren bei Raumtemperatur, wodurch modifiziertes Siliciumdioxid erhalten wird,
e) Behandeln des in Schritt c) erhaltenen modifizierten Siliciumdioxids durch kontinuierliche Rückführung mit einer Säure, wodurch aktives modifiziertes Siliciumdioxid erhalten wird,
f) Inkontaktbringen des in Schritt d) erhaltenen aktiven modifizierten Siliciumdioxids mit dem Wasser, aus dem die Nitrate entfernt werden sollen.

2. Verfahren gemäß Anspruch 1, wobei das Alkohol-Wasser-Volumenverhältnis in Schritt b) 3/1 bis 6/1 beträgt.

3. Verfahren gemäß Anspruch 1, wobei der Alkohol aus Schritt b) aus Ethanol und Methanol ausgewählt ist.

4. Verfahren gemäß dem vorhergehenden Anspruch, wobei der Alkohol Ethanol ist.

5. Verfahren gemäß dem vorhergehenden Anspruch, wobei der Katalysator Ammoniak ist.

6. Verfahren gemäß Anspruch 1, wobei in Schritt c) eine aus Tetraethylorthosilicat, Trimethoxysilan und Methyltriethoxysilan ausgewählte Alkoxysilanverbindung hinzugefügt wird.

7. Verfahren gemäß dem vorhergehenden Anspruch, wobei die Alkoxysilanverbindung Tetraethylorthosilicat ist.

8. Verfahren gemäß Anspruch 1, wobei das Aminoalkoxysilan aus Schritt d) aus 3-Aminopropyltriethoxysilan und 3-Aminopropyltrimethoxysilan ausgewählt ist.

9. Verfahren gemäß Anspruch 1, das ferner einen Dekantier- und Lufttrocknungsschritt des erhaltenen modifizierten Siliciumdioxids zwischen Schritt d) und e) umfasst.

10. Verfahren gemäß Anspruch 1, wobei die Säure in Schritt e) aus Salzsäure und Essigsäure ausgewählt ist.

11. Verfahren nach Anspruch 1, wobei die Säure Salzsäure ist.

12. Verfahren nach Anspruch 11, wobei der Säureanteil 10 ml zwischen 0,08 und 0,2 M HCl pro 1 g des modifizierten Siliciumdioxids beträgt.

## Revendications

1. Procédé d'adsorption de nitrates présents dans de l'eau à l'aide de silice modifiée active provenant de cendres de paille de riz, qui comprend les étapes suivantes :
a) la combustion de paille de riz pour produire des cendres de paille de riz et l'extraction de silice à partir des cendres de paille de riz résultantes,
b) l'ajout de ladite silice extraite à partir des cendres de paille de riz à un mélange d'alcool et d'eau ce qui permet d'obtenir une suspension,
c) l'ajout d'un catalyseur choisi parmi l'ammoniac, l'acétate d'ammonium, le carbonate d'ammonium, l'oxyde de magnésium, l'hydroxyde de calcium, la triéthanolamine et la dicyclohexylamine, à la suspension de l'étape a) et le maintien sous agitation à température ambiante,
d) l'ajout d'un composé aminoalcoxysilane au mélange de l'étape b) et le maintien sous agitation, à température ambiante, ce qui permet d'obtenir de la silice modifiée,
e) le traitement par recirculation continue de la silice modifiée obtenue à l'étape c) avec un acide, ce qui permet d'obtenir de la silice modifiée active,
f) la mise en contact de la silice modifiée active obtenue à l'étape d) avec l'eau dont les nitrates doivent être éliminés.

2. Procédé selon la revendication 1, dans lequel le rapport volumique alcool/eau à l'étape b) va de 3/1 à 6/1.

3. Procédé selon la revendication 1, dans lequel l'alcool de l'étape b) est choisi entre l'éthanol et le méthanol.

4. Procédé selon la revendication précédente, dans lequel l'alcool est l'éthanol.

5. Procédé selon la revendication précédente, dans lequel le catalyseur est l'ammoniac.

6. Procédé selon la revendication 1, dans lequel à l'étape c) un composé alcoxysilane choisi parmi l'orthosilicate de tétraéthyle, le triméthoxysilane et le méthyltriéthoxysilane est ajouté.

7. Procédé selon la revendication précédente, dans lequel le composé alcoxysilane est l'orthosilicate de tétraéthyle.

8. Procédé selon la revendication 1, dans lequel l'aminoalcoxysilane de l'étape d) est choisi entre le 3-aminopropyltriéthoxysilane et le 3-aminopropyltriméthoxysilane.

9. Procédé selon la revendication 1, comprenant en outre entre les étapes d) et e) une étape de décantation et de séchage à l'air de la silice modifiée obtenue.

10. Procédé selon la revendication 1, dans lequel l'acide à l'étape e) est choisi entre l'acide chlorhydrique et l'acide acétique.

11. Procédé selon la revendication 1, dans lequel l'acide est l'acide chlorhydrique.

12. Procédé selon la revendication 11, dans lequel la proportion d'acide est de 10 ml de HCl entre 0,08 et 0,2 M pour 1 g de la silice modifiée.
